# FASCICULE DE BREVET EUROPEEN

(11) **EP 3 424 677 B1**
(45) Date de publication et mention de la délivrance du brevet: **11.03.2020**
(21) Numéro de dépôt: 18176986.0
(22) Date de dépôt: 11.06.2018
(51) Int. Cl.: B29C 45/28, B29C 45/27

(54) **DISPOSITIF DE COMMANDE POUR INSTALLATION DE MOULAGE PAR INJECTION**
STEUERVORRICHTUNG FÜR SPRITZGUSSANLAGE
CONTROL DEVICE FOR INJECTION-MOULDING INSTALLATION

(30) Priorité: 06.07.2017 FR 1756363
(43) Date de publication de la demande: 09.01.2019
(73) Titulaire: CEMA Technologies, 72100 Le Mans (FR)
(72) Inventeur: BOUILLOUD, Marc, 72200 La Fleche (FR); PERROCHON, Julien, 72000 Le Mans (FR); MARTIN, Emmanuel, 72550 Degre (FR)
(74) Mandataire: Laget, Jean-Loup

(56) Documents cités:
- CN-U- 205 889 750
- DE-A1- 10 321 355
- US-A- 5 855 934

## Description

### DOMAINE DE L'INVENTION

L'invention concerne un dispositif de commande pour installation de moulage par injection.

### ART ANTERIEUR

Le document US 5 855 934 décrit un dispositif de commande pour installation de moulage par injection comprenant une buse axiale pour l'alimentation en matière plastique fluide de cavités moulantes, une pièce à déplacer axialement, un vérin annulaire coaxial à la buse et des moyens mécaniques de liaison à la pièce à déplacer. La manœuvre de l'obturateur est assurée au moyen d'un piston annulaire qui impose un parcours anguleux au canal d'amenée de la matière plastique fluide.

Le document EP 2 427 317 décrit des pointes d'injection pour installation de moulage par injection, équipées d'obturateurs de seuil d'injection. Ces obturateurs doivent être manœuvrés en synchronisme pour autoriser ou arrêter l'injection simultanément à toutes les pointes d'injection de l'installation. Dans l'exemple de réalisation d'une installation de moulage à quatre pointes d'injection alignées sur une face du bloc répartiteur de matière plastique fluide, les obturateurs doivent être déplacés par un dispositif de commande situé en arrière du bloc répartiteur par rapport aux pointes d'injection. Il en résulte deux inconvénients : d'une part une augmentation de l'encombrement de l'installation de moulage, d'autre part une fragilité des obturateurs en raison de leur grande longueur.

### BUT ET RESUME

L'invention a pour but de proposer un dispositif de commande pour installation de moulage par injection qui ne présente pas les inconvénients précités.

L'invention a pour objet un dispositif de commande pour installation de moulage par injection, comportant une buse chaude axiale pour l'alimentation en matière plastique fluide de cavités moulantes au moyen d'un bloc répartiteur, et une pièce à déplacer axialement au cours des opérations de moulage, comprenant un vérin annulaire disposé coaxialement à la buse chaude, et des moyens mécaniques de liaison du vérin à la pièce à déplacer, caractérisé en ce que les moyens mécaniques de liaison du vérin à la pièce à déplacer sont constitués par des bras portés par le vérin et des tiges d'accrochage portées par la pièce à déplacer.

Avantageusement, les bras sont au nombre de quatre et régulièrement répartis sur la face supérieure du vérin annulaire.

De préférence, les quatre bras présentent à leur extrémité supérieure un profil en creux pour la réception d'une tige d'accrochage.

Avantageusement, les tiges d'accrochage sont au nombre de deux et fixées à la base de la pièce à déplacer.

Selon un mode de réalisation, la pièce à déplacer est une batterie d'obturateurs aptes à obturer les seuils d'injection des cavités moulantes.

### BREVE DESCRIPTION DES FIGURES

L'invention est décrite ci-après avec référence aux dessins annexés dans lesquels :
La Fig.1 est une vue simplifiée en perspective d'un exemple de réalisation d'une batterie d'obturateurs pour installation de moulage par injection à seize pointes d'injection.
La Fig.2 est une vue simplifiée de dessus de la batterie d'obturateurs de la Fig. 1 en position de fonctionnement.

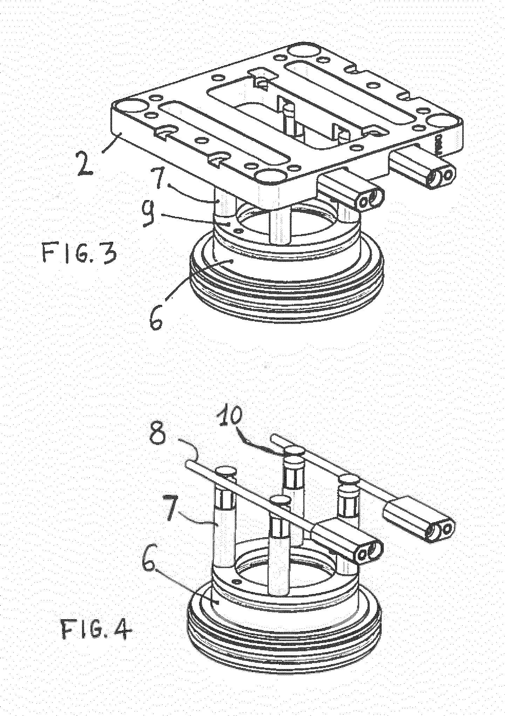

La Fig.3 est une vue simplifiée en perspective d'un exemple de réalisation du dispositif de commande selon l'invention en position de fonctionnement.
La Fig.4 est une vue simplifiée en perspective du dispositif de commande selon la Fig.3 montrant la liaison entre ledit dispositif et la batterie d'obturateurs.
La Fig. 5 est une vue simplifiée en coupe axiale de la partie centrale d'une installation de moulage par injection, réalisée dans le plan passant par les axes de deux bras opposés du dispositif de commande selon la Fig.3.

### DESCRIPTION DETAILLEE

Dans une installation de moulage par injection, il est connu d'utiliser une buse chaude axiale pour l'alimentation en matière plastique fluide de cavités moulantes, au moyen d'un bloc répartiteur. Il est également connu d'utiliser des cavités moulantes qui sont ouvertes et fermées par des mouvements linéaires de déplacement. L'invention s'applique à toute pièce à déplacer axialement au cours des opérations de moulage par injection, et la description qui suit est faite, à titre d'exemple, avec référence au mode de réalisation particulier d'une batterie d'obturateurs.

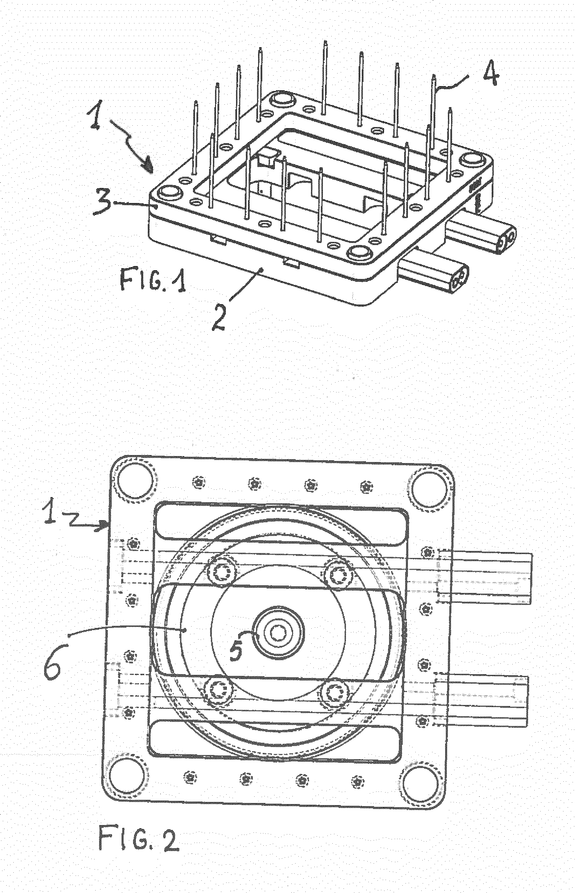

Dans l'exemple de réalisation de la Fig.1, la batterie 1 d'obturateurs est composée d'une base 2 et d'un corps 3, de forme sensiblement carrée. Le corps 3 porte sur chacun de ses quatre côtés, quatre obturateurs 4, de longueur identique, aptes chacun à obturer un seuil d'injection. Une telle batterie 1 d'obturateurs 4 est particulièrement adaptée au cas d'une installation de moulage par injection latérale, comportant un bloc répartiteur de forme parallélépipédique, de section sensiblement carrée, assurant, sur chacune de ses quatre faces latérales, l'alimentation en matière plastique fluide de quatre pointes d'injection aboutissant chacune à un seuil d'injection.

Le bloc répartiteur (non représenté) est alimenté par une buse chaude 5 d'axe vertical.

Le dispositif de commande d'obturateurs selon l'invention est disposé sous le bloc répartiteur, autour de la buse chaude axiale 5, de façon à ne pas augmenter l'encombrement de l'installation de moulage par injection. Il est constitué essentiellement d'un vérin annulaire 6, sensiblement coaxial à la buse chaude 5, et de moyens mécaniques de liaison à la batterie 1 d'obturateurs 4. Dans l'exemple de réalisation représenté, ces moyens mécaniques sont constitués par quatre bras 7 et deux tiges d'accrochage 8. Les quatre bras 7 sont verticaux, régulièrement répartis sur la face supérieure 9 du vérin annulaire 6.

A leur extrémité supérieure, les bras 7 présentent un profil en creux 10 apte à recevoir une tige 8 d'accrochage. Deux tiges 8 d'accrochage sont prévues, disposées parallèlement l'une à l'autre, chacune s'accrochant à deux bras 7. Les tiges 8 sont fixées à la base 2 de la batterie 1 d'obturateurs. La base 2 étant sensiblement carrée, les tiges 8 sont fixées chacune perpendiculairement à deux côtés opposés de la base et parallèlement aux deux autres côtés. Les bras 7 étant accrochés par deux sur chaque tige 8, définissent en plan un carré dont les côtés sont parallèles à ceux de la base 2 de la batterie 1 d'obturateurs.

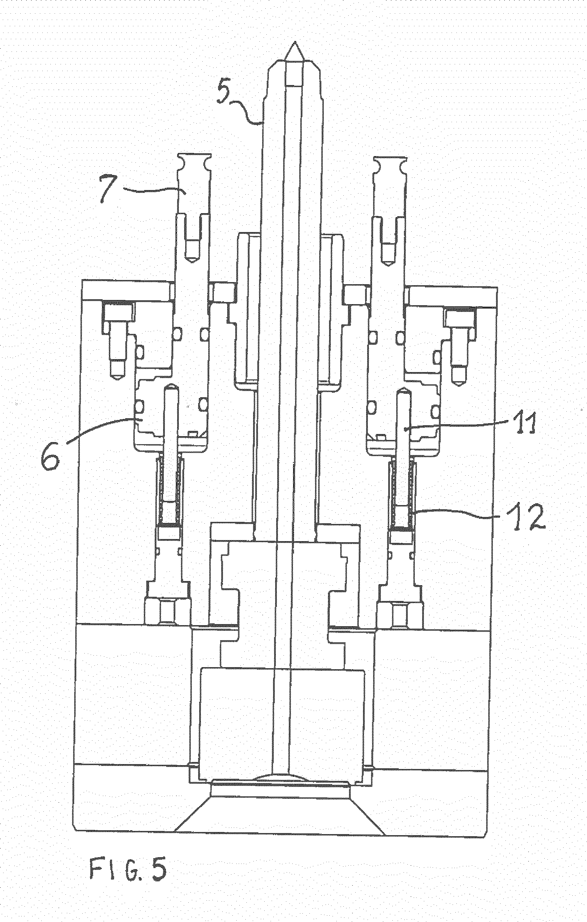

Dans l'exemple de réalisation représenté sur la Fig. 5, les moyens de positionnement en rotation du vérin annulaire 6 sont symbolisés essentiellement par deux tiges de guidage 11 coulissant dans des bagues à billes 12 fixées dans la carcasse de l'installation de moulage par injection.

Le fonctionnement du dispositif de commande d'obturateurs se déroule de la manière suivante, le vérin annulaire étant initialement en position basse, les obturateurs ayant libéré les seuils d'injection. L'injection de matière plastique fluide dans les cavités moulantes est effectuée. La commande du vérin annulaire 6 vers le haut est déclenchée. La batterie d'obturateurs est soulevée par le vérin 6 et les obturateurs atteignent les seuils d'injection et les obturent. Après libération des pièces moulées, la commande du vérin annulaire 6 vers le bas est déclenchée et la batterie d'obturateurs est descendue, libérant les seuils d'injection pour une nouvelle injection.

La disposition du vérin annulaire 6 coaxialement à la buse chaude 5 d'alimentation du bloc répartiteur de l'installation de moulage par injection latérale est particulièrement avantageuse car elle donne une assise large à la batterie d'obturateurs tout en assurant une course relativement courte des obturateurs, ce qui augmente la sécurité de fonctionnement.

## Revendications

1. Dispositif de commande pour installation de moulage par injection, comportant une buse chaude axiale pour l'alimentation en matière plastique fluide de cavités moulantes au moyen d'un bloc répartiteur, et une pièce à déplacer axialement au cours des opération de moulage, comprenant un vérin annulaire (6) disposé coaxialement à la buse chaude (5) et des moyens mécaniques de liaison du vérin (6) à la pièce à déplacer, **caractérisé en ce que** les moyens mécaniques de liaison du vérin (6) à la pièce à déplacer sont constitués par des bras (7) portés par le vérin (6) et des tiges d'accrochage (8) portées par la pièce à déplacer.

2. Dispositif de commande selon la revendication 1 **caractérisé en ce que** les bras (7) sont au nombre de quatre et régulièrement répartis sur la face supérieure (9) du vérin annulaire (6).

3. Dispositif de commande selon la revendication 2 **caractérisé en ce que** les quatre bras (7) présentent à leur extrémité supérieure un profil en creux (10) pour la réception d'une tige (8) d'accrochage.

4. Dispositif de commande selon la revendication 1 **caractérisé en ce que** les tiges (8) d'accrochage sont au nombre de deux et fixées à la base (2) de la pièce à déplacer.

5. Dispositif de commande selon l'une des revendications 1 à 4 **caractérisé en ce que** la pièce à déplacer est une batterie (1) d'obturateurs aptes à obturer les seuils d'injection des cavités moulantes.

## Patentansprüche

1. Steuervorrichtung für Spritzgussanlage, umfassend eine axiale heiße Düse zur Versorgung von Formhohlräumen mit flüssigem Kunststoffmaterial mit Hilfe eines Verteilerblocks und eines Teils, der im Laufe des Formvorgangs axial verschoben werden soll, umfassend einen runden Zylinder (6), der axial zur heißen Düse (5) angeordnet ist, und mechanische Mittel zur Verbindung des Zylinders (6) mit dem Teil, der verschoben werden soll, **dadurch gekennzeichnet, dass** die mechanischen Mittel zur Verbindung des Zylinders (6) mit dem Teil, der verschoben werden soll, aus Armen (7) bestehen, die vom Zylinder (6) getragen werden, und Befestigungsstiften (8), die vom Teil, der verschoben werden soll, getragen werden.

2. Steuervorrichtung nach Anspruch 1, **dadurch gekennzeichnet, dass** vier Stück Arme (7) vorhanden und regelmäßig auf der oberen Fläche (9) des runden Zylinders (6) verteilt sind.

3. Steuervorrichtung nach Anspruch 2, **dadurch gekennzeichnet, dass** die vier Arme (7) an ihrem oberen Ende ein hohles Profil (10) zur Aufnahme eines Befestigungsstifts (8) aufweisen.

4. Steuervorrichtung nach Anspruch 1, **dadurch gekennzeichnet, dass** zwei Stück Befestigungsvorrichtungen (8) vorhanden und an der Basis (2) des Teils, der verschoben werden soll, fixiert sind.

5. Steuervorrichtung nach einem der Ansprüche 1 bis 4, **dadurch gekennzeichnet, dass** der Teil (1), der verschoben werden soll, eine Reihe von Verschlüssen ist, die ausgelegt sind, um die Spritzschwellen der Formhohlräume zu verschließen.

## Claims

1. A control device for an injection molding facility, including an axial hot nozzle for supplying fluid plastic to molding cavities using a distributing unit, and a part to be moved axially during molding operations, comprising an annular jack (6) arranged coaxially with respect to the hot nozzle (5) and mechanical means for connecting the jack (6) to the part to be moved, **characterized in that** the mechanical means for connecting the jack (6) to the part to be moved are made up of arms (7) carried by the jack (6) and attachment rods (8) borne by the part to be moved.

2. The control device according to claim 1, **characterized in that** there are four arms (7) evenly distributed on the upper face (9) of the annular jack (6).

3. The control device according to claim 2, **characterized in that** all four arms (7) have, at their upper end, a hollow profile (10) for receiving an attachment rod (8).

4. The control device according to claim 1, **characterized in that** there are two attachment rods (8), which are fastened to the base (2) of the part to be moved.

5. The control device according to one of claims 1 to 4, **characterized in that** the part to be moved is a battery (1) of closing members able to close the injection thresholds of the molding cavities.
